# EUROPEAN PATENT APPLICATION

(11) **EP 4 700 923 A1**
(43) Date of publication of application: **25.02.2026**
(21) Application number: 25190941.2
(22) Date of filing: 22.07.2025
(51) Int. Cl.: H01M 50/103, H01M 50/107, H01M 50/119, H01M 50/184, H01M 50/186, H01M 50/193, H01M 50/474, H01M 50/477, H01M 50/486, H01M 50/571, H01M 50/586, H01M 50/593

(54) **SECONDARY BATTERY, BATTERY PACK AND ELECTRONIC DEVICE**

(30) Priority: 21.08.2024 CN 202422039940 U
(71) Applicant: AESC Japan Ltd., Yokohama-Shi, Kanagawa 220-0012 (JP)
(72) Inventor: CHEN, Xiu, Jiangyin City, Wuxi City, 214443 (CN)
(74) Representative: Becker, Eberhard

(57) **Abstract**

A secondary battery (100), including: a housing (200), including an end wall (111) having a first assembly hole (1110) and a side wall (112) surrounding the end wall (111); a lower plastic (30), having a second assembly hole (300) corresponding to the first assembly hole (1110), wherein a surface (32) of the lower plastic (30) facing the end wall (111) includes a plane (322) surrounding the second assembly hole (300) and an inclined plane (321) surrounding and connected to the plane (322), and the plane (322) contacts a surface of the end wall (111) facing inside the housing (200), wherein as a distance between the inclined plane (321) and the second assembly hole (300) increases, a distance between the inclined plane (321) and the end wall (111) increases; and a terminal post (50), passing through the first and second assembly holes (1110, 300).

## Description

### BACKGROUND

### Technical Field

The disclosure relates to a secondary battery, a battery pack, and an electronic device.

### Description of Related Art

In the field of new energy power batteries, a conventional secondary battery includes an electrode assembly, a housing, a cover plate, etc. The electrode assembly includes a positive electrode sheet, a negative electrode sheet, and a separator located between the positive electrode sheet and the negative electrode sheet. The positive electrode sheet, the negative electrode sheet, and the separator are stacked and then wound to form the electrode assembly, which is then packaged in the housing. Normally, a lower plastic is provided between the electrode assembly and an end wall of the housing to prevent displacement of the electrode assembly and to provide insulation effects.

### SUMMARY

The disclosure provides a secondary battery, a battery pack, and an electronic device to at least improve the safety of the secondary battery.

To achieve the above objective, the disclosure provides a secondary battery. The secondary battery includes a housing, including an end wall and a side wall surrounding the end wall. The end wall has a first assembly hole. The secondary battery includes a lower plastic having a second assembly hole corresponding to the first assembly hole. A surface of the lower plastic facing the end wall includes a plane surrounding the second assembly hole and an inclined plane surrounding and connected to the plane. The plane contacts a surface of the end wall facing inside the housing. As a distance between the inclined plane and the second assembly hole increases, a distance between the inclined plane and the end wall increases. The secondary battery also includes a terminal post, including a columnar portion and an inner flange. The columnar portion passes through the first assembly hole and the second assembly hole. The inner flange is connected to an end of the columnar portion located inside the housing and clamps the lower plastic together with the end wall.

In some embodiments, a gap is provided between an outer edge of the lower plastic and the side wall.

In some embodiments, in a direction from the end wall to the lower plastic, the lower plastic does not extend beyond the inner flange of the terminal post. An included angle between the inclined plane and the end wall is in a range from 1° to 30°.

In some embodiments, the lower plastic is provided with a through hole, penetrating the lower plastic in a thickness direction of the lower plastic, at the inclined plane.

In some embodiments, a distance between the inner flange and the inclined plane is greater than 2 mm. The lower plastic is also provided with the through hole at the plane.

In some embodiments, the lower plastic is provided with a reinforcing rib, protruding toward the end wall, on the inclined plane.

In some embodiments, the lower plastic includes a flat portion corresponding to the plane and an inclined portion corresponding to the inclined plane. The whole inclined portion is inclined in a direction relative to the flat portion and away from the end wall. Alternatively, a surface of the lower plastic facing inside the housing is a flat surface.

In some embodiments, the lower plastic includes a weak portion disposed at a location between the plane and the inclined plane, and a thickness of at least a part of the weak portion is less than a thickness of the lower plastic at the plane or at the inclined plane.

An embodiment of the present application further provides a battery pack, including the secondary battery of any of the above embodiments.

An embodiment of the present application further provides an electronic device, including the battery pack.

The beneficial technical effect of the disclosure lies in the following:

The surface of the lower plastic facing the end wall in the embodiments of the present application includes the plane and the inclined plane surrounding and connected to the plane. As a distance between the inclined plane and the second assembly hole increases, a distance between the inclined plane and the end wall increases. That is, the inclined plane is not bonded to the end wall and is inclined in a direction away from the end wall, so that the electrolyte located between the lower plastic and the housing is discharged along the inclined plane toward a direction of the electrode assembly. Electrolyte accumulation between the lower plastic and the housing, which causes liquid-phase corrosion, is thereby avoided. This prevents the interior of the housing from blackening or rusting, and prevents a reduction in the strength of the housing. The safety of the secondary battery is thereby improved.

### BRIEF DESCRIPTION OF THE DRAWINGS

In order to more clearly illustrate the technical solutions in the embodiments of the present application or in the prior art, a brief introduction of the drawings required to be used in the descriptions of the embodiments or the prior art is given below. It is obvious that the drawings described below are some embodiments of the present application, and for a person having ordinary skill in the art, other drawings can also be obtained based on these drawings without creative effort.
FIG. 1 shows a partial sectional view of a secondary battery of the prior art.
FIG. 2 shows a perspective view of a lower plastic of the prior art.
FIG. 3 shows a surface of the lower plastic of the prior art facing an electrode assembly.
FIG. 4 shows a schematic diagram when an electronic device in an embodiment of the present application is a vehicle.
FIG. 5 shows a perspective view of the secondary battery according to an embodiment of the present application.
FIG. 6 shows a top view of the secondary battery.
FIG. 7 shows a sectional view taken along line AA in FIG. 6.
FIG. 8 shows an enlarged view of a part on the side where a terminal post is located in FIG. 7.
FIG. 9 shows one side of a bottom surface of a lower plastic according to a first embodiment of the present application.
FIG. 10 shows a sectional view taken along line BB in FIG. 9.
FIG. 11 shows one side of a bottom surface of a lower plastic according to a second embodiment of the present application.
FIG. 12 shows a sectional view taken along line CC in FIG. 11.
FIG. 13 shows one side of a bottom surface of a lower plastic according to a third embodiment of the present application.
FIG. 14 shows a sectional view taken along line DD in FIG. 13.
FIG. 15 shows one side of a bottom surface of a lower plastic according to a fourth embodiment of the present application.
FIG. 16 shows a sectional view taken along line EE in FIG. 15.

### DESCRIPTION OF THE EMBODIMENTS

For a better understanding of the spirit of the embodiments of the present application, the following provides further explanation in conjunction with some preferred embodiments of the present application.

The embodiments of the present application will be described in detail below. In the entire specification of the present application, the same or similar components and components having the same or similar functions are represented by similar reference numerals. The embodiments related to the drawings described herein are illustrative and diagrammatic in nature and are used to provide a basic understanding of the present application. The embodiments of the present application should not be construed as limitations to the present application.

As used herein, the terms "substantially," "generally," "essentially," and "about" are used to describe and indicate minor variations. When used in connection with an event or circumstance, the terms may refer to instances in which the event or circumstance precisely occurs as well as instances in which the event or circumstance nearly occurs.

In the present specification, unless otherwise specified or limited, relative terms such as "central," "longitudinal," "lateral," "front," "rear," "right," "left," "inner," "outer," "lower," "upper," "horizontal," "vertical," "above," "below," "top," "bottom," and derivative terms thereof (for example, "horizontally," "downwardly," "upwardly," and the like) shall be interpreted as referring to the directions described in the discussion or illustrated in the drawings. These relative terms are used only for convenience of description and do not require that the present application be constructed or operated in any particular orientation.

For convenience of description, "first," "second," "third," and the like may be used herein to distinguish different components in one figure or a series of figures. "First," "second," and "third" are not intended to describe the corresponding components.

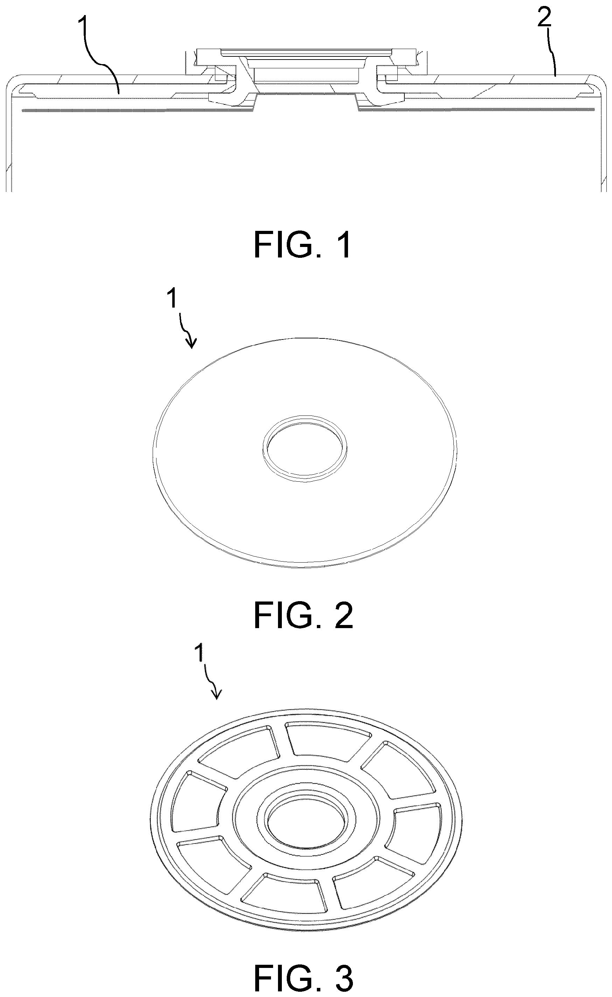

FIG. 1 shows a partial sectional view of a secondary battery of the prior art. FIG. 2 shows a perspective view of a lower plastic 1 of the prior art, in which a surface of the lower plastic 1 facing a housing 2 (the material is generally steel) is shown. This surface is a flat surface. FIG. 3 shows a surface of the lower plastic 1 of the prior art facing an electrode assembly (JR). The assembly process of the secondary battery includes the following steps. The lower plastic 1 is placed into the housing. A terminal post (the material is generally aluminum) is assembled to the lower plastic 1 and the housing, and then the lower plastic 1 is clamped to the housing by riveting of the terminal post. In consideration of the volumetric utilization rate of the secondary battery, the lower plastic 1 of the prior art is generally bonded to the housing. However, in the process of riveting, the terminal post presses the lower plastic 1 in a radial direction, causing an edge of the lower plastic 1 to possibly abut against the housing. That is, a center of the lower plastic 1 is subjected to a radially outward force, and the edge of the lower plastic 1 is subjected to a radially inward force, resulting in a downward concave deformation occurring in a part of the lower plastic 1. The lower plastic 1 is a solid sheet, and an accommodating cavity in which electrolyte accumulates is likely to form at the deformed location. In the injection process, the secondary battery is placed in a direction with the terminal post facing downward, and injection is performed from an end of the secondary battery opposite to the terminal post. At this time, the lower plastic 1 is located at the lowermost position inside the housing. Electrolyte will seep into a space between the lower plastic 1 and the housing, causing corrosion to the housing due to accumulation of the electrolyte. Because of the existence of the deformed concave portion of the lower plastic 1, more electrolyte accumulates between the lower plastic 1 and the housing. After the secondary battery undergoes cyclic use for a period of time, a concentrated, more intense liquid-phase corrosion to the housing will occur.

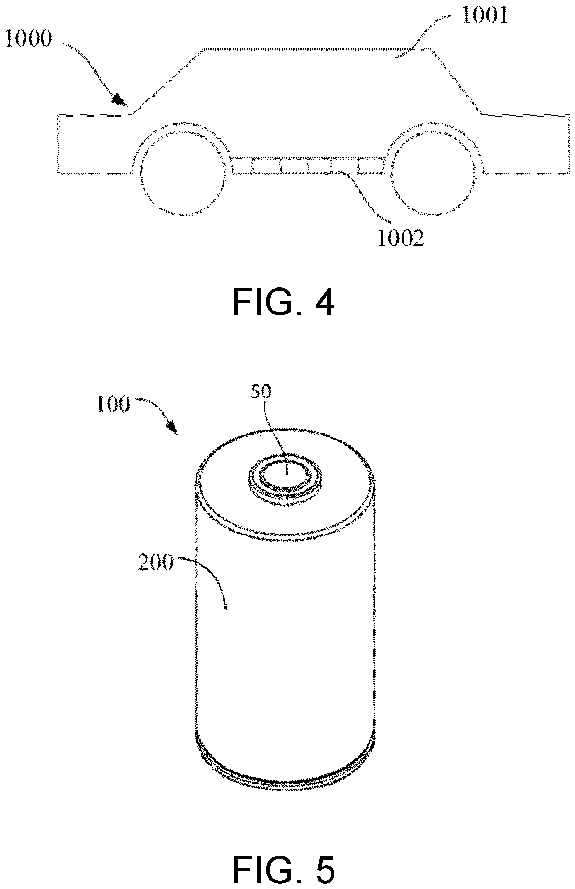

The disclosure provides an electronic device 1000. In the following embodiments, for convenience of explanation, the electronic device 1000 is described using a vehicle as an example. Referring to FIG. 4, a battery pack 1002 is provided inside the vehicle. The battery pack 1002 may be provided at a bottom, a front, or a rear of a vehicle body 1001. The battery pack 1002 may be configured for power supply of the vehicle. For example, the battery pack 1002 may serve as an operating power source of the vehicle. A working portion of the electronic device 1000 is electrically connected to the battery pack 1002 to obtain electrical energy support. The vehicle may be a fuel vehicle, a gas vehicle, or a new energy vehicle. The new energy vehicle may be a pure electric vehicle, a hybrid vehicle, or a range-extended vehicle, and so on, but is not limited thereto. The working portion is the vehicle body. The battery pack 1002 is provided at the bottom of the vehicle body and provides electrical energy support for the driving of the vehicle or the operation of electrical components inside the vehicle. However, in some other embodiments, the electronic device 1000 may also be a mobile phone, a portable device, a notebook computer, a ship, a spacecraft, an electric toy, an electric tool, and so on. The spacecraft includes aircraft, rockets, space shuttles, and spaceships, and so on. The working portion may obtain electrical energy of the battery pack 1002 and perform corresponding work as a unit component, for example, a blade rotation unit of a fan, or a vacuuming working unit of a vacuum cleaner. The electric toy includes fixed or movable electric toys. For example, game consoles, electric car toys, electric ship toys, and electric aircraft toys, and so on. The electric tool includes metal cutting electric tools, grinding electric tools, assembly electric tools, and electric tools for railway use. For example, electric drills, electric grinders, electric wrenches, electric screwdrivers, electric hammers, impact drills, concrete vibrators, and electric planers, and so on. The embodiment of the present application does not impose special limitations on the electronic device 1000.

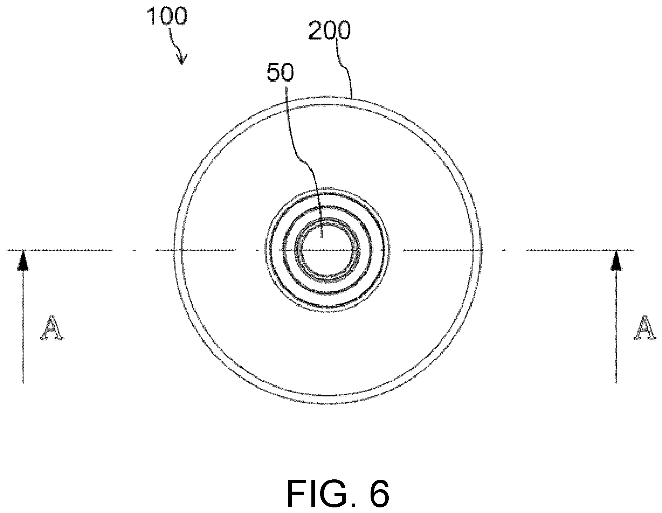

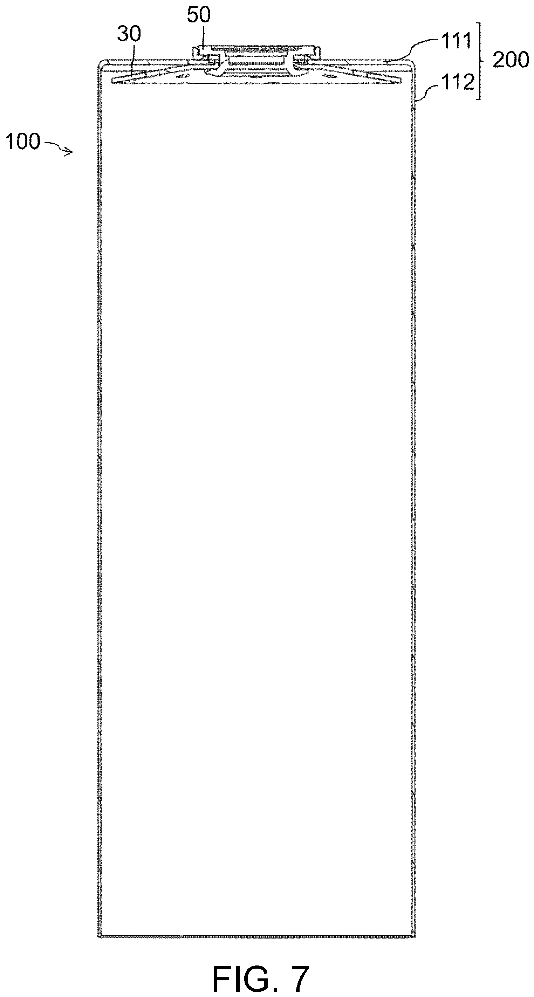

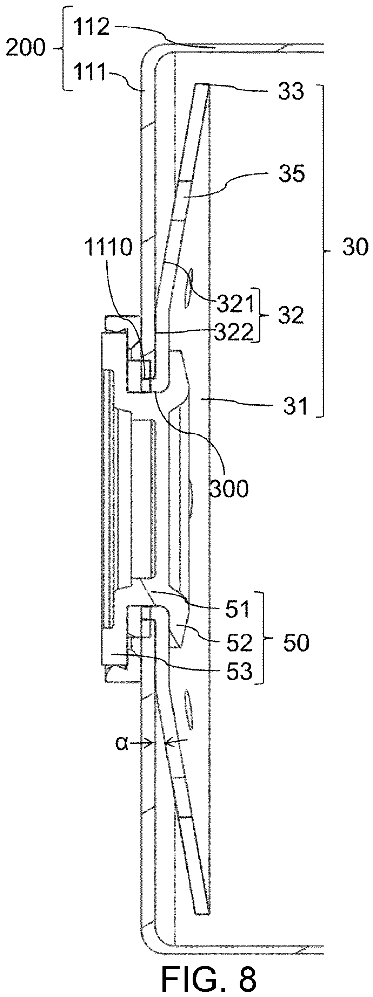

FIG. 5 shows a perspective view of a secondary battery 100 according to an embodiment of the present application. FIG. 6 shows a top view of the secondary battery 100. FIG. 7 shows a sectional view taken along line AA in FIG. 6, in which the electrode assembly and other components inside a housing 200 are omitted. FIG. 8 shows an enlarged view of a part on the side where a terminal post 50 is located in FIG. 7. An embodiment of the present application provides a secondary battery 100. The secondary battery 100 includes a housing 200, a lower plastic 30 located inside the housing 200, an electrode assembly, a current collecting plate, and a terminal post 50 assembled on the housing 200 and the lower plastic 30. The terminal post 50 is, for example, a positive terminal post. The housing 200 includes an end wall 111 and a side wall 112 surrounding the end wall 111. The end wall 111 has a first assembly hole 1110. The lower plastic 30 has a second assembly hole 300 corresponding to the first assembly hole 1110. The terminal post 50 includes an outer flange 53, a columnar portion 51, and an inner flange 52. The outer flange 53 is located outside the housing 200. The columnar portion 51 passes through the first assembly hole 1110 and the second assembly hole 300. The columnar portion 51 of the terminal post 50 is connected to the outer flange 53 at an end located outside the housing 200. The inner flange 52 is connected to the outer flange 53 at an end located inside the housing 200. The inner flange 52 and the end wall 111 clamp the lower plastic 30 together. The inner flange 52 of the terminal post 50 contacts a surface of the lower plastic 30 facing the electrode assembly / opposite to the end wall 111 (hereinafter referred to as a top surface 31) and fixes the lower plastic 30 to an inner side surface of the end wall 111 facing inside the housing 200.

As long as a stable sealing and electrical connection relationship can be formed, a connection between the end wall 111 and the side wall 112 may be achieved in various ways. For example, the connection may be integrally formed by stamping, integrally formed by casting, or formed by separate welding, and so on. The surrounding shape of the side wall 112 is not limited, and may surround in a cylindrical or prismatic shape, or may surround along any other closed-loop profile that can match the end wall. An accommodating cavity is formed inside the housing 200 for accommodating the electrode assembly, the electrolyte, the lower plastic 30, the current collecting plate, and other necessary components of the battery. Specifically, a diameter of the housing 200 may be determined according to a specific size of the electrode assembly. A material of the housing 200 may be various types, such as copper, iron, aluminum, steel, aluminum alloy, and so on. In order to prevent the housing 200 from rusting during long-term use, a layer of rust-prevention material, such as metal nickel, may also be plated on a surface of the housing 200. The secondary battery 100 may be a cylindrical cell. The cylindrical cell is, for example, a 4680 cylindrical cell having a height of 80 mm and a diameter of 46 mm. Another example is a cylindrical cell having a height of 15 mm and a diameter of 46 mm.

The electrode assembly is a component in the secondary battery 100 in which an electrochemical reaction occurs. One or more electrode assemblies may be contained in the housing 200. The electrode assembly is a wound-type or stacked-type electrode assembly, including stacked and/or wound positive electrode sheets, a first separator, negative electrode sheets, and a second separator. The positive electrode sheet includes a positive current collector and a positive active material layer coated on the positive current collector. A first coated region coated with the positive active material layer and a first uncoated region not coated with the positive active material layer are formed on the positive current collector. The first coated region and the first uncoated region are arranged in a height direction of the electrode assembly. The first uncoated region extends toward one end of the height direction of the secondary battery 100 beyond the separator and forms a bent positive tab. The negative electrode sheet includes a negative current collector and a negative active material layer coated on the negative current collector. A second coated region coated with the negative active material layer and a second uncoated region not coated with the negative active material layer are formed on the negative current collector. The second coated region and the second uncoated region are arranged in the height direction of the electrode assembly. The second uncoated region also extends toward one end of the height direction of the secondary battery 100 beyond the separator and forms a bent negative tab. The first separator and the second separator are provided between the positive electrode sheet and the negative electrode sheet to separate the positive active material layer and the negative active material layer. Taking a lithium-ion secondary battery 100 as an example, the material of the positive current collector may be aluminum. The positive active material layer includes a positive active material. The positive active material may be lithium cobalt oxide, lithium iron phosphate, ternary lithium, or lithium manganese oxide, and so on. The material of the negative current collector may be copper. The negative active material layer includes a negative active material. The negative active material may be carbon or silicon, and so on. The base material of the first separator and the second separator may be PP (polypropylene) or PE (polyethylene), and so on. To provide protection and insulation for the electrode assembly, an insulating film may also be coated on the outside of the electrode assembly. The insulating film may be synthesized from PP, PE, PET, PVC, or other polymer materials.

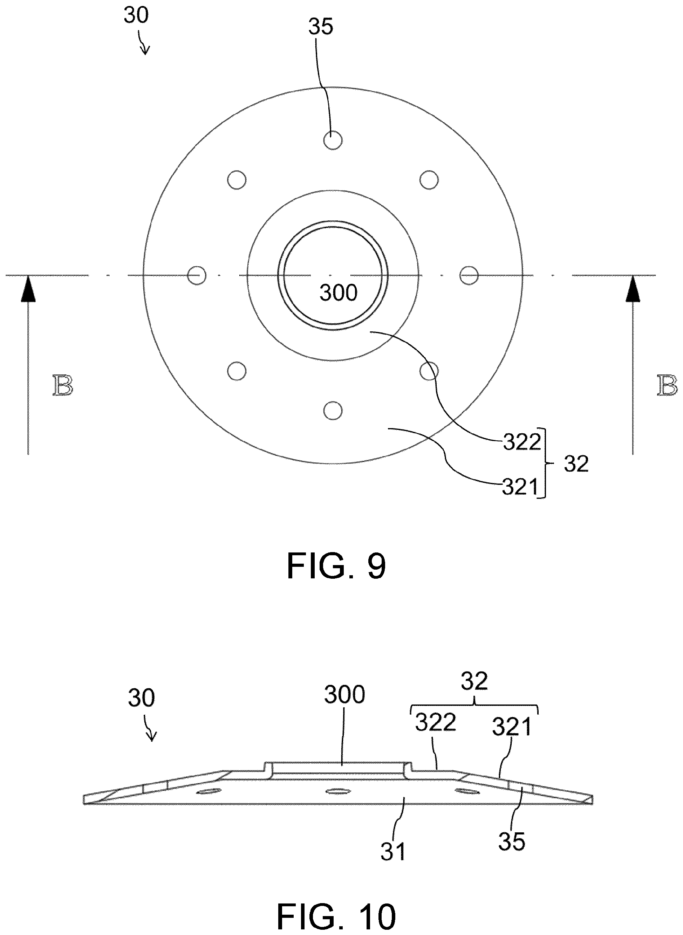

FIGs. 9 and 10, FIGs. 11 and 12, FIGs. 13 and 14, and FIGs. 15 and 16 respectively show a lower plastic 30 according to a first embodiment to a fourth embodiment of the present application.

FIG. 9 shows one side of a bottom surface 32 (facing the end wall 111) of the lower plastic 30 according to the first embodiment of the present application. FIG. 10 shows a sectional view taken along line BB in FIG. 9. A surface of the lower plastic 30 of the embodiment of the present application facing the end wall 111 / opposite to the electrode assembly (hereinafter referred to as a bottom surface 32) includes a plane 322 surrounding the second assembly hole 300, and an inclined plane 321 surrounding and connected to the plane 322. The plane 322 contacts a surface of the end wall 111 facing inside the housing 200. As a distance between the inclined plane 321 and the second assembly hole 300 increases, a distance between the inclined plane 321 and the end wall 111 increases. That is to say, the inclined plane 321 is not bonded to the end wall 111 and is inclined in a direction away from the end wall 111, so that electrolyte located between the lower plastic 30 and the housing 200 is discharged along the inclined plane 321 toward the electrode assembly. Electrolyte accumulation between the lower plastic 30 and the housing 200 that causes concentrated and aggravated corrosion to the housing 200 is avoided. The safety of the secondary battery 100 is improved.

An inner ring portion of the bottom surface 32 of the lower plastic 30 in the embodiment of the present application is a plane 322 connected to the inclined plane 321. The terminal post 50 rivets a portion of the plane 322 to the end wall 111. The inclined plane 321 causes the lower plastic 30 to have an eaves-like shape. As shown in FIG. 8, a certain gap is provided between an outer edge 33 of the lower plastic 30 and the side wall 112 of the housing 200. Therefore, the electrolyte cannot stay between the lower plastic 30 and the end wall 111. In the embodiment shown in FIG. 8, the lower plastic 30 extends beyond the inner flange 52 of the terminal post 50. In a preferred embodiment, in a direction from the end wall 111 to the lower plastic 30, that is, in a direction from the bottom surface 32 to the top surface 31, the lower plastic 30 does not extend beyond the inner flange 52 of the terminal post 50. That is to say, an inclined dimension of the lower plastic 30 does not exceed a maximum thickness of the inner flange 52. The inner flange 52 occupies a certain longitudinal (the left-right direction shown in FIG. 8) space inside the secondary battery 100. If the lower plastic 30 exceeds the inner flange 52, the lower plastic 30 needs to occupy additional longitudinal space. That is, a larger space is required between a current collecting plate, which welds the terminal post 50 and a tab of the electrode assembly, and the end wall 111. A height of the secondary battery 100 becomes greater, resulting in a relatively smaller energy density of the secondary battery 100. The lower plastic 30 in the embodiment of the present application does not exceed the inner flange 52, so that electrolyte can be smoothly discharged while not reducing the energy density of the secondary battery 100. An included angle α between the inclined plane 321 and the end wall 111 is in a range from 1° to 30°, and preferably in a range from 5° to 15°. The included angle α is greater than 1°, so as to ensure the inclination of the inclined plane 321. An upper limit exists for the included angle α, so as to avoid the lower plastic 30 exceeding the inner flange 52 of the terminal post 50.

The lower plastic 30 may be provided, at the inclined plane 321, with a through hole 35 penetrating the lower plastic 30 in a thickness direction thereof, that is, penetrating from the top surface 31 to the bottom surface 32. When electrolyte flows along the inclined plane 321 and passes through the through hole 35, the electrolyte can be discharged from the through hole 35 toward the electrode assembly, which is beneficial to the circulation of the electrolyte. On the other hand, regarding the plane 322, at least a part of the plane 322 extends beyond the inner flange 52. A distance from a terminal position of the plane 322 (that is, a starting position of the inclined plane 321) to the inner flange 52 is in a range from 0.1 mm to 10 mm, and preferably from 0.5 mm to 3 mm. When the distance is greater than 2 mm, due to the effect of gravity, a very small gap may exist between the plane 322 and the end wall 111. Electrolyte may seep into the gap, and a through hole 35 may also be provided at the plane 322 to discharge electrolyte that may exist between the plane 322 and the end wall 111. At least one annular through hole 35 may be provided on the lower plastic 30. A number of the through holes 35 in a same annular arrangement is in a range from 1 to 16. A diameter of the through hole 35 is in a range from 0.3 mm to 5 mm, and preferably from 1.0 mm to 3.0 mm. A shape of a projection of the through hole 35 is not limited to a circular shape shown in FIG. 9, and may also be rectangular, racetrack-shaped, parallelogram-shaped, or other irregular shapes.

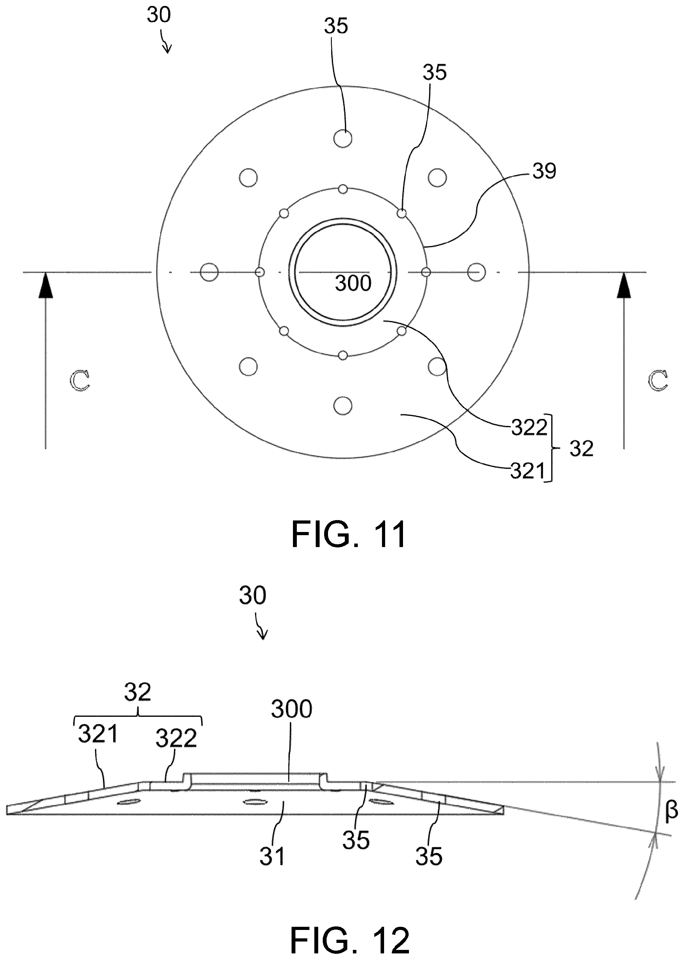

FIG. 11 shows one side of a bottom surface 32 (facing the end wall 111) of the lower plastic 30 according to a second embodiment of the present application. FIG. 12 shows a sectional view taken along line CC in FIG. 11. In the second embodiment, the lower plastic 30 includes a weak portion 39 disposed at a location between the plane 322 and the inclined plane 321. A plurality of through holes 35 is provided at the weak portion 39. At the through holes 35, a thickness of the lower plastic 30 is 0, so as to reduce a strength of the weak portion 39, allowing the lower plastic 30 to better bend to form the inclined plane 321 with an included angle β relative to the plane 322. The included angle β is equal to an included angle α between the inclined plane 321 and the end wall 111. A diameter of the through hole 35 formed at the weak portion 39 may be smaller than a diameter of the through hole 35 at the location of the inclined plane 321, so as to avoid an excessively weakened overall structure of the lower plastic 30 caused by large holes opened in the inner ring. In other embodiments, the through hole 35 may not be provided at the weak portion 39. Instead, a local thickness or an entire circumferential thickness of the weak portion 39 is reduced, such that at least a part of the thickness is smaller than a thickness of the lower plastic 30 at the plane 322 or at the inclined plane 321. For example, at least a part of the thickness is 0.1 to 0.9 times the thickness of the lower plastic 30 at the plane 322 or at the inclined plane 321.

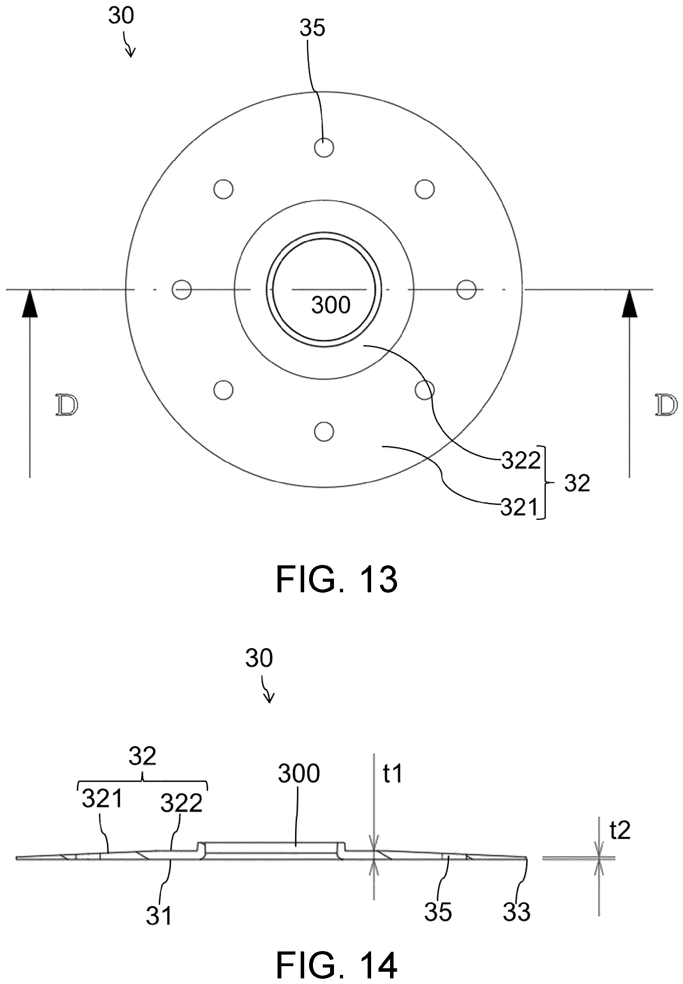

FIG. 13 shows one side of a bottom surface 32 (facing the end wall 111) of the lower plastic 30 according to a third embodiment of the present application. FIG. 14 shows a sectional view taken along line DD in FIG. 13. In the first embodiment and the second embodiment, the lower plastic 30 includes a flat portion corresponding to the plane 322, and an inclined portion corresponding to the inclined plane 321. The whole inclined portion is inclined in a direction away from the end wall 111 with respect to the flat portion. That is to say, a surface of the inclined portion facing the electrode assembly is also inclined with respect to the flat portion. A thickness between the top surface 31 and the bottom surface 32 of the lower plastic 30 may be uniform, that is, the lower plastic 30 has an equal wall thickness. The third embodiment shows a lower plastic 30 having an unequal wall thickness. The lower plastic 30 is not configured such that the inclined portion corresponding to the inclined plane 321 is as a whole inclined with respect to the flat portion as shown in the first and second embodiments, but instead, the top surface 31 thereof is still a flat surface, and an inclined plane 321 is formed in the bottom surface 32 by gradually reducing the thickness of the lower plastic 30 outward in a radial direction. A thickness t1 of the lower plastic 30 at the plane 322 is, for example, in a range from 0.4 mm to 2.0 mm, and preferably from 0.6 mm to 1.2 mm. A thickness t2 of the lower plastic 30 at the outer edge 33 is, for example, in a range from 0.1 mm to 1.5 mm, and preferably from 0.2 mm to 0.7 mm. The thickness t2 is less than the thickness t1.

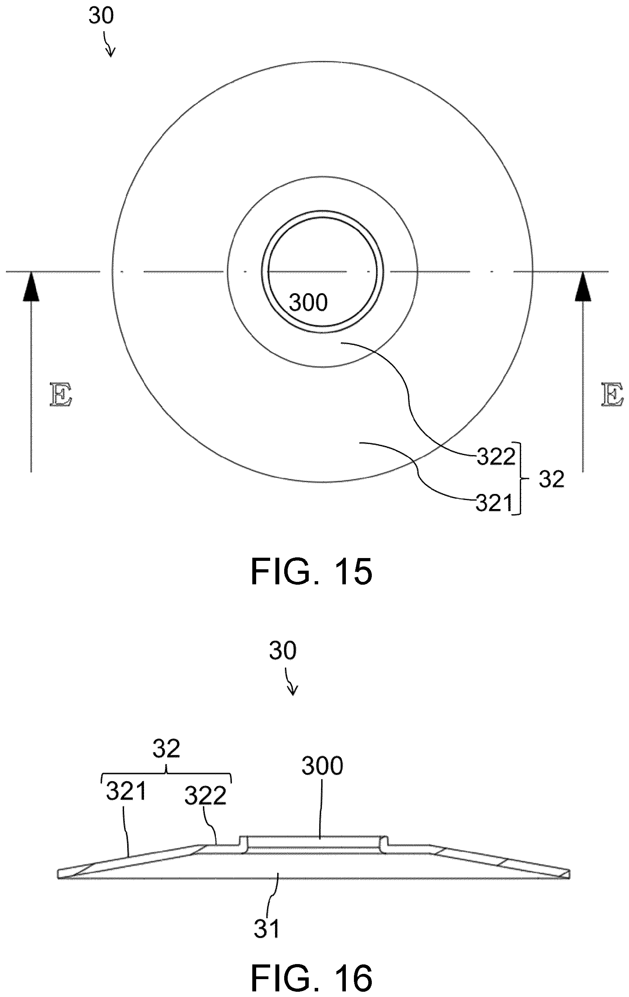

FIG. 15 shows one side of a bottom surface 32 (facing the end wall 111) of the lower plastic 30 according to a fourth embodiment of the present application. FIG. 16 shows a sectional view taken along line EE in FIG. 15. The difference from the first to third embodiments is that the lower plastic 30 of the fourth embodiment is not provided with the through hole 35.

During a cycling process of the secondary battery 100, gas may be generated and cause expansion. Expansion of electrode sheets causes the electrode assembly to first expand in a circumferential direction, and then electrode sheets at an outer ring will bulge toward two ends of the secondary battery 100. Therefore, the electrode sheets will push upward / press against the current collecting plate and the lower plastic 30. This may cause the lower plastic 30 to be bonded to the end wall 111, and when the lower plastic 30 is pressed so that it is no longer inclined, the size of the lower plastic 30 may become larger than a diameter of the end wall 111, resulting in the outer edge 33 of the lower plastic 30 contacting the side wall 112, and a situation may occur as in the prior art in which a local concave deformation of the lower plastic 30 causes accumulation of electrolyte. Reinforcing ribs protruding toward the end wall 111 may be provided on the inclined plane 321 of the lower plastic 30 in the first to fourth embodiments, to provide support for the inclined plane 321 of the lower plastic 30, so as to prevent the inclined plane 321 from being pushed by the bulging electrode sheet and thus being bonded to the end wall 111, and to maintain an inclination of the inclined plane 321.

In addition, the lower plastic 30 of the first to fourth embodiments of the present application may all be formed in one shot through injection molding.

An embodiment of the present application provides an eaves-shaped lower plastic 30. The bottom surface 32 thereof is not an entire flat surface, but includes the plane 322 and the inclined plane 321, wherein an angle exists between the plane 322 and the inclined plane 321. The inclined plane 321 is not bonded to the end wall 111, and the inclined plane 321 is inclined in a direction away from the end wall 111, so that electrolyte located between the lower plastic 30 and the housing 200 is discharged along the inclined plane 321 toward the electrode assembly, thereby preventing accumulation of electrolyte between the lower plastic 30 and the housing 200 that may cause concentrated and aggravated corrosion to the housing 200, and improving the safety of the secondary battery 100. The lower plastic 30 may have an equal wall thickness, with a portion where the inclined plane 321 is located being entirely inclined in a direction away from the end wall 111. The lower plastic 30 may also have a variable wall thickness, in which the inclined plane 321 is formed through a transition from a high thickness to a low thickness, facilitating the outflow of electrolyte. Through holes 35 may also be provided on the lower plastic 30, which is more conducive to the outflow of electrolyte.

An embodiment of the present application further provides a battery pack 1002, including the secondary battery 100 of any embodiment of the above, and the battery pack 1002 may have the above-mentioned beneficial effects regarding the secondary battery 100.

An embodiment of the present application further provides an electronic device 1000, including the battery pack 1002, and the electronic device 1000 may have the above-mentioned beneficial effects regarding the secondary battery 100 and/or the battery pack 1002.

## Claims

1. A secondary battery (100), comprising:
a housing (200), comprising an end wall (111) and a side wall (112) surrounding the end wall (111), wherein the end wall (111) has a first assembly hole (1110);
a lower plastic (30), having a second assembly hole (300) corresponding to the first assembly hole (1110), wherein the secondary battery (100) is **characterized in that** a surface (32) of the lower plastic (30) facing the end wall (111) comprises a plane (322) surrounding the second assembly hole (300) and an inclined plane (321) surrounding and connected to the plane (322), the plane (322) contacts a surface of the end wall (111) facing inside the housing (200), and as a distance between the inclined plane (321) and the second assembly hole (300) increases, a distance between the inclined plane (321) and the end wall (111) increases; and
a terminal post (50), comprising a columnar portion (51) and an inner flange (52), wherein the columnar portion (51) passes through the first assembly hole (1110) and the second assembly hole (300), and the inner flange (52) is connected to an end of the columnar portion (51) located inside the housing (200) and clamps the lower plastic (30) together with the end wall (111).

2. The secondary battery (100) according to claim 1, wherein a gap is provided between an outer edge (33) of the lower plastic (30) and the side wall (112).

3. The secondary battery (100) according to claim 1, wherein in a direction from the end wall (111) to the lower plastic (30), the lower plastic (30) does not extend beyond the inner flange (52) of the terminal post (50),
and an included angle between the inclined plane (321) and the end wall (111) is in a range from 1° to 30°.

4. The secondary battery (100) according to claim 1, wherein the lower plastic (30) is provided with a through hole (35), penetrating the lower plastic (30) in a thickness direction of the lower plastic (30), at the inclined plane (321).

5. The secondary battery (100) according to claim 4, wherein a distance between the inner flange (52) and the inclined plane (321) is greater than 2 mm, and the lower plastic (30) is also provided with the through hole (35) at the plane (322).

6. The secondary battery (100) according to claim 1, wherein the lower plastic (30) is provided with a reinforcing rib, protruding toward the end wall (111), on the inclined plane (321).

7. The secondary battery (100) according to claim 1, wherein the lower plastic (30) comprises a flat portion corresponding to the plane (322) and an inclined portion corresponding to the inclined plane (321), the whole inclined portion being inclined in a direction relative to the flat portion and away from the end wall (111), or a surface (31) of the lower plastic (30) facing inside the housing (200) is a flat surface.

8. The secondary battery (100) according to claim 1, wherein the lower plastic (30) comprises a weak portion (39) disposed at a location between the plane (322) and the inclined plane (321), and a thickness of at least a part of the weak portion (39) is less than a thickness of the lower plastic (30) at the plane (322) or at the inclined plane (321).

9. A battery pack (1002), comprising the secondary battery (100) according to any one of claims 1-8.

10. An electronic device (1000), comprising the battery pack (1002) according to claim 9.
